# EUROPEAN PATENT SPECIFICATION

(11) **EP 1 846 683 B1**
(45) Date of publication and mention of the grant of the patent: **25.11.2009**
(21) Application number: 06734321.0
(22) Date of filing: 03.02.2006
(51) Int. Cl.: F16K 31/04

(54) **ELECTRIC MOTOR DRIVEN VALVE ASSEMBLY HAVING STATOR SEALING**
DURCH EINEN ELEKTROMOTOR ANGETRIEBENE VENTILANORDNUNG MIT STATORDICHTUNG
ENSEMBLE VANNE COMMANDE PAR UN MOTEUR ELECTRIQUE PRESENTANT UN SYSTEME POUR L'ETANCHEITE DU STATOR

(30) Priority: 08.02.2005 US 650828 P
(43) Date of publication of application: 24.10.2007
(73) Proprietor: PARKER HANNIFIN CORPORATION, Cleveland, OH 44124-4141 (US); Jahwa Electronics Co., Ltd., Cheongwon-gun, Chungbuk 363-922 (KR)
(72) Inventor: NUNGESSER, Roy, Oviedo, FL 32765 (US); FLEISCHER, Bill, Chester, CT 06412 (US); KIM, Andrew S., Cheongju-shi, Chungbuk 361-270 (KR); LEE, Jung-Hoon, Cheongju-shi Chungbuk 360-774 (KR); KIM, Sun-Tae, Cheongju-shi, Chungbuk 360-774 (KR)
(74) Representative: Albutt, Anthony John
(86) International application number: PCT/US2006/003895
(87) International publication number: WO 2006/086236

(56) References cited:
- EP-A- 0 982 838
- EP-A- 1 164 279
- US-A- 4 480 614
- PATENT ABSTRACTS OF JAPAN vol. 1997, no. 03, 31 March 1997 (1997-03-31) -& JP 08 296758 A (AISAN IND CO LTD), 12 November 1996 (1996-11-12)
- PATENT ABSTRACTS OF JAPAN vol. 2003, no. 04, 2 April 2003 (2003-04-02) -& JP 2002 357275 A (FUJI KOKI CORP), 13 December 2002 (2002-12-13)
- PATENT ABSTRACTS OF JAPAN vol. 2000, no. 15, 6 April 2001 (2001-04-06) -& JP 2000 346226 A (FUJI KOKI CORP), 15 December 2000 (2000-12-15)

## Description

### CROSS REFERENCE TO RELATED APPLICATIONS

The present application claims the benefit of the filing date of U.S. Provisional Patent Application Serial No. 60/650,828, filed February 8, 2005.

### FIELD OF THE INVENTION

The present invention pertains to a stepmotor valve assembly that includes separable stator and rotor-valve assemblies. The rotor-valve assembly may be fixedly secured to an apparatus and has a housing adapted to slip fit inside a stator cavity. Locking members on the noted assemblies permit rotary interlocking upon the slip fit assembly and relative rotation thereof. A plurality of differing sealing arrangements located in the vicinity of an open end of the stator assembly permit the sealing of the interlocked stator and rotor-valve assemblies relative to each other.

### BACKGROUND OF THE INVENTION

Driven rotary electrical valves, such as stepmotor valves, commonly are used to control the flow of a variety of fluids. Often the fluids that are controlled are under pressure such as, for example, in air-conditioning and refrigeration systems. A stepmotor valve typically includes a stepping motor having a threaded rotating shaft that is connected to a needle valve assembly. The needle valve assembly rotationally and axially moves into and out of physical engagement with a fixed orifice seat. A separate electronic controller sends a series of electronic pulses to a stator of the stepping motor in a manner known in the art, thereby causing rotor-valve assembly to rotate so as to vary the valve opening.

The stepmotor valve of this invention is a removable "dry stator" type. The phrase "dry stator" indicates that the stator electrical windings are not inside the pressure vessel (e.g., not in the refrigerant environment, for instance) in which the rotor-valve assembly is mounted. These types of "dry stator" stepmotor valves include a stator valve assembly that can be removed from the rotor-valve assembly without opening the pressurized valve.

Stepmotor valves are used in a wide range of environmental temperatures, pressures, and humidity levels including very wet environments that undergo continuous cycles of freezing and thawing. Existing stepmotor valves have little or no protection from the damaging effects of moisture and the distorting effects of freeze/thaw cycling.

In prior art valves that are exposed to wet and/or freezing environments, moisture enters the stator housing through one or more openings in the stator housing, through the open end of the stator cavity, or through both. This moisture causes the eventual failure of the valve due to the corrosion and/or deformation of valve components. Specifically, the stator teeth that encircle stator windings typically are comprised of magnetic iron having a minimal thickness of protective plating. Moisture, over time, causes corrosion of the stator teeth. This corrosion allows moisture to penetrate motor windings causing an electrical malfunction of the motor. The expansion effects of freezing water, for example, can also cause stress cracks in the stator, thus allowing additional moisture penetration into the stator windings. The expansion effects of freezing water may also cause the permanent deformation of the rotor housing, thus preventing proper rotation of the rotor.

The patent literature includes a large number of electrically rotary driven valve assemblies and stepmotor valves including: U.S. Patent No. 4,574,686 to Budzich; U.S. Patent No. 4,650,156 to Kawahira; U.S. Patent No. 5,087,686 to Ishibashi et al.*;* U.S. Publication No. 2002/0189693 to Berto; Japanese Abstract No. 08321823 to Korniya et al.*;* and Japanese Abstract 2002081559 to Nomura et al*.* However, none of the prior art structures appear to utilize and/or suggest the unique configurations set forth herein.

Electrically rotary driven valve assemblies of this type are known from the documents EP1164279, US 4480614, EP 0982838 and JP 08296758*.*

### SUMMARY OF THE INVENTION

Aspects of the invention are set out in the accompanying claims.

The present invention improves upon existing stepmotor valves by providing a waterproof seal between the stator assembly and the rotor-valve assembly. Additionally, the present invention provides a completely enclosed, non-perforated, dame-topped stator housing. The waterproof designs and structures provided by the differing sealing arrangements of the present invention prevent damaging corrosion and ice build-up between the stator assembly and rotor case or housing of the rotor-valve assembly by preventing moisture intrusion.

Specifically, in one embodiment, the present invention relates to an electric motor driven valve assembly comprising all of the features of claim 1.

In one version thereof the valve assembly is operated by a stepping motor. In another version, the stator housing and the rotor housing include associated locking members. The locking member of the rotor housing includes a locating plate ring portion.

In a further embodiment of the present invention, an electrically rotatable stepmotor valve assembly comprises all of the features of claim 11.

The previously-described advantages and features, as well as other advantages and features, will become readily apparent from the detailed description of the preferred embodiments that follow.

The present invention improves upon existing stepmotor valve assemblies by providing a waterproof seal between the stator assembly and the rotor-valve assembly as well as providing a completely enclosed, non-perforated, dome-topped stator housing. The waterproof designs and structures provided via the use of the differing sealing arrangements of the present invention prevent damaging corrosion and ice build-up between the stator assembly and rotor housing of the rotor-valve assembly by preventing moisture intrusion.

### DESCRIPTION OF THE DRAWINGS

Fig. 1 is a partially exploded sectional view of one embodiment of an electric motor driven valve assembly constructed in accordance with the present invention;
Fig. 2 is a view similar to that of Fig. 1, but showing the valve assembly in an assembled condition;
Fig. 2A is an enlarged view of a portion of Fig. 2;
Fig. 3 is an elevation view of a rotor housing constructed in accordance with the present invention;
Fig. 4 is a bottom view of the rotor housing of Fig. 3, looking in the direction of arrows 4-4 of Fig. 3;
Fig. 5 is an elevation view of a stator housing constructed in accordance with the present invention;
Fig. 6 is a bottom view of the stator housing of Fig. 5, looking in the direction of arrows 6-6 of Fig. 5; and
Figs. 7-12 are views similar to that of Fig. 2A successively showing a plurality of alternative sealing arrangements in accordance with the present invention.

### DETAILED DESCRIPTION OF THE INVENTION

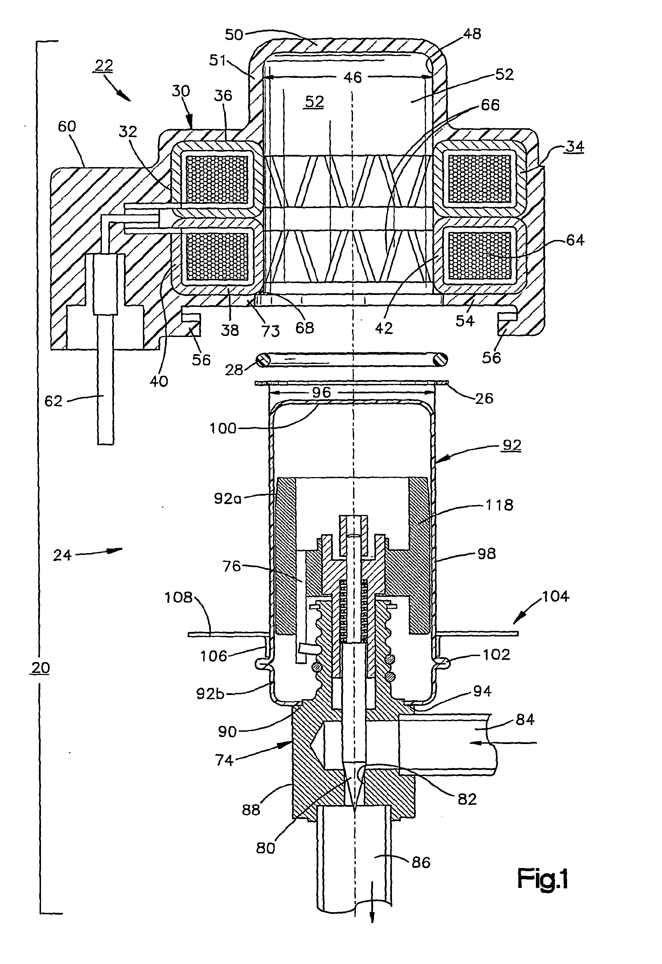

Referring now to the drawings, illustrated in Fig. 1 is a partially exploded, sectional view of one embodiment an electric motor driven valve assembly, generally indicated at 20, of the present invention. The electric motor driven valve assembly 20 includes a stator assembly 22, a rotor-valve assembly 24, an annular ring member, such as washer 26, and a sealing member, such as an O-ring 28.

The stator assembly 22 includes an asymmetrical housing 30 having a first, or large, inside diameter portion 32. The first inside diameter portion 32 receives an annular stator portion 34 of an electric motor. The stator portion 34 includes upper and lower ring-shaped surfaces 36 and 38 as well as outer and inner cylindrical surfaces 40 and 42. The housing 30 also includes an axially outwardly extending dome portion 50 having a second, or smaller, inside diameter portion 48. A cylindrical wall portion 51 of the dome portion 50 has essentially the same inner diametrical extent 46 as the inner cylindrical surface 42 of the stator portion 34. The stator inner cylindrical portion 42 and the cylindrical wall portion 51 of the dome portion 50 of the housing 30 collectively define an internal cavity 52 of the housing.

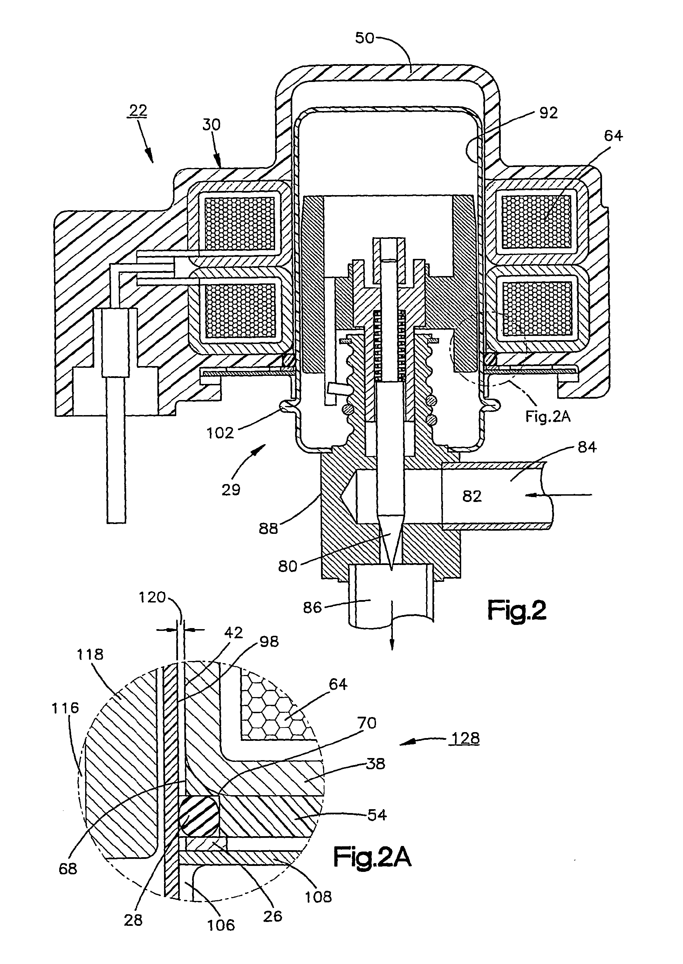

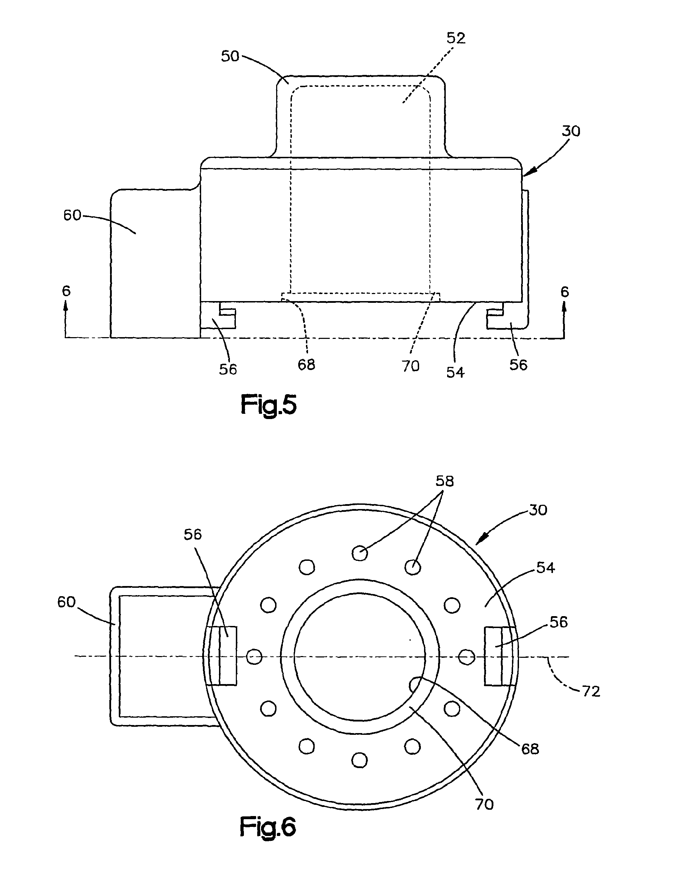

As best seen in Figs. 1, 5 and 6, the housing 30 includes, adjacent its annular bottom wall 54, a pair of diametrically opposed, inwardly-directed projections 56. The inwardly-directed projections are spaced slightly away from the annular bottom wall 54. In addition, as best seen in Fig. 6, bottom wall 54 includes peripherally spaced, dimpled recesses 58. As best shown in Fig. 2A, the bottom wall 54 terminates at an end surface 68. The end surface 68 is generally cylindrical and extends congruently with the inner cylindrical surface 42 of the stator portion 34. A stator groove 70 extends into the end surface 68 adjacent a lowermost surface of the bottom wall 54.

The stator assembly 22 also includes a peripheral receptacle portion 60 for receiving a wire lead 62. The wire lead 62 is operatively connected with stator windings 64. Fig. 1 also illustrates stator teeth 66 at inner cylindrical surface 42 of the stator portion 34.

With reference to Fig. 1, the rotor-valve assembly 24 includes a valve assembly portion 74, such as a needle valve assembly. The valve assembly portion 74 includes a threaded rotatable shaft 76 that is operatively connected to an axially moveable valve portion 80. Valve portion 80 is moveable axially into and out of physical contact and engagement with a fixed orifice seat 82 that controls the fluid flow between a fluid inlet pipe 84 and a fluid outlet pipe 86.

Attached to a flange 90 of needle valve body 88 is a lower end portion 94 of a generally cylindrical rotor housing 92. The rotor housing 92 has a cylindrical outer surface 98 having a diametrical outer extent 96. The cylindrical outer surface 98 is closed at its upper end by circular end portion 100. An annular, radially outwardly extending bead 102 is formed in the housing 92 between a lower portion 92b and an upper portion 92a. Physically located within rotor housing 92 is a rotor portion 118 of an electric motor. The rotor portion 118 of the electric motor is rotationally coupled with valve assembly portion 74 in a manner well known in the art.

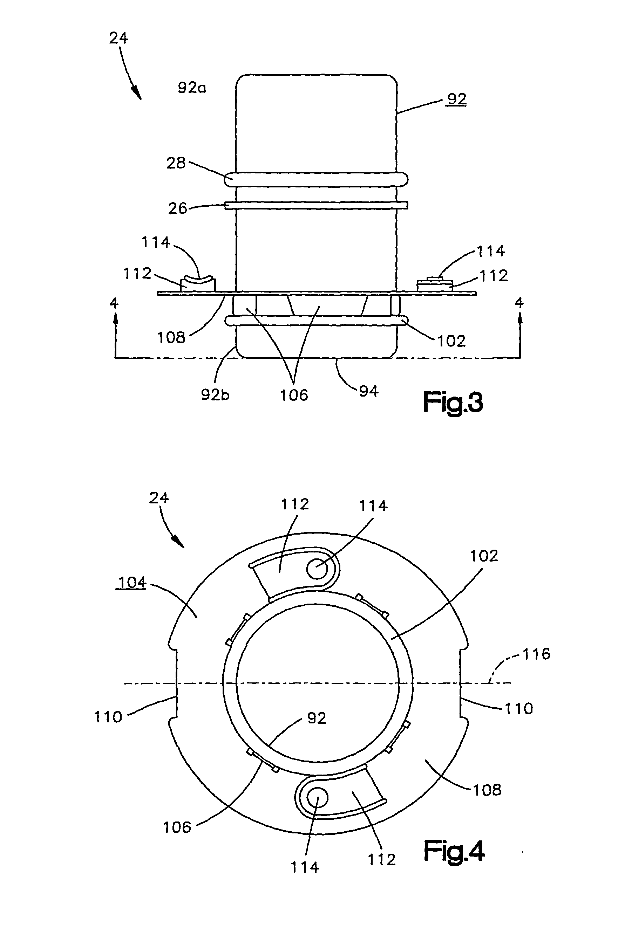

A locating plate 104 having axial, peripherally spaced leg portions 106 and a radially extending ring portion 108 is permanently affixed, such as by spot welding, to housing portion 92a at a location in which the leg portions 106 abut the bead 102. Ring portion 108 includes diametrically opposed cut-outs 110, best seen in Fig. 4. As shown in Figs, 3 and 4, ring portion 108 may also include two outwardly-directed spring-like, curved fingers 112, each having an outwardly-directed dimple 114.

Advancing now to Figs. 2 and 2A, the former illustrates valve assembly 20 in the assembled condition, i.e., when rotor-valve assembly 24 is received in the stator cavity 52 and is secured relative to the stator assembly 22. Specifically, the rotor-valve assembly 24 is received in the stator cavity 52 of the stator assembly 22 through an open end. The open end of the stator cavity 52 is the only opening into the stator cavity as the remainder of the stator cavity is closed by the stator housing 30. The rotor-valve assembly 24 is received in the stator assembly 22 in a slip-fit manner that leaves an annular air gap 120 (Fig. 2A) between stator assembly and rotor-valve assembly.

As best visualized by viewing Figs. 4 and 6, which illustrate bottom views of rotor housing 92 and stator housing 30, respectively, during the assembly of stator assembly 22 and the rotor-valve assembly 24, projections 56 pass through the cut-outs 110 of the ring portion 108 of the locating plate 104. This occurs when axes 72 and 116 of Figs. 6 and 4, respectively, are collinear. The stator housing 30 may be moved relative to the rotor housing 92 until the bottom wall 54 of the stator housing engages dimples 114 of locating plate fingers 112. The stator housing 30 is then rotated relative to the rotor housing 92 so as to move locating plate cut-outs 110 out of alignment with projections 56, thereby capturing locating plate ring portion 108 between the projections 56 and the bottom wall 54 of the stator housing 30. When the locating plate ring portion 108 is secured between the projections 56 and the bottom wall 54 of the stator housing 30, dimples 114 mate with recesses 58 and thus, lock the stator assembly 22 relative to the rotor-valve assembly 24. The locking force between the dimples 114 and recesses 58 is determined by the spring force exerted by spring fingers 112 and generally is set to be readily overcome by a human operator. Once disengagement is desired, stator assembly 22 is rotated until locating plate cut-outs 110 again are aligned with projections 56. The stator assembly 22 is then moved axially away from the rotor-valve assembly 24. It should be understood that locating plate 104 together with projections 56 form associated locking members that permit the noted interlocking of stator assembly 22 with rotor-valve assembly 24.

The preferred embodiment of the present invention (Figs. 1 and 2) includes a stator assembly 22 that, at its upper end, is enclosed, by the stator housing 30, including dome portion 50 and, at its lower end, is sealed to rotor housing 92 of the rotor-valve assembly 24. The sealing arrangement 128 (Fig. 2A) between the stator assembly 22 and the rotor-valve assembly 24 includes retaining washer 26 and sealing member 28. As shown in Fig. 2A, when the rotor-valve assembly 24 and stator assembly 22 are secured together, in the manner already described, the washer 26 is supported on an upper surface of locating plate ring portion 108. The washer 26 serves to retain sealing member 28 in stator groove 70 and in a position interposed between and engaging both the stator housing 30 and the rotor housing 92 thereby closing air gap 120 so as to prevent moisture intrusion.

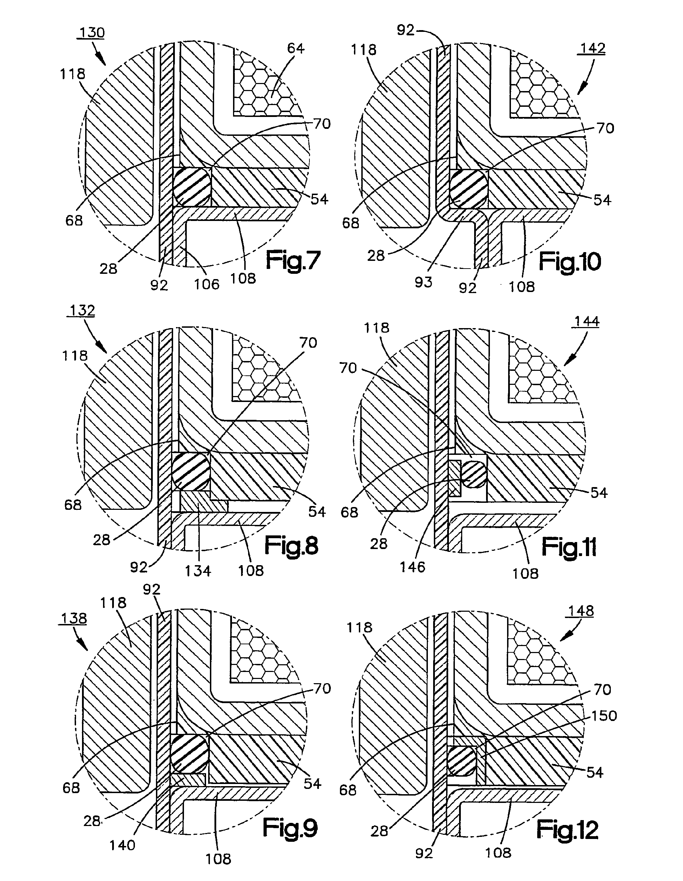

Additional, differing seal geometries, such as those set forth in Figs. 7-12, will be discussed in more detail hereinafter. It should be understood that a unique, common feature of all of the structures and designs of Figs. 7-12 includes a supplemental seal 28 that is provided between rotor housing 92 and stator assembly 22. The structures and designs of Figs. 7-12 also include a non-perforated, dome-topped stator assembly 22. When discussing Figs. 7-12, structures or features that have previously been described are referred to using the same reference numbers as used with reference to Figs. 1-6.

Turning first to Fig. 7, the design and structure of this sealing arrangement 130 does not require the use of washer 26 in order to retain sealing member 28. Locating plate ring portion 108 is sufficient to retain sealing member 28 in its sealing position within stator groove 70.

The Fig. 8 design and structure illustrate a sealing arrangement 132 utilizing a stepped annular retainer 134 that is affixed to the bottom wall 54 of stator housing 30 for retaining the sealing member 28 in the stator groove 70. This embodiment is similar to sealing arrangement 128 (Figs. 1, 2 and 2A), except that the shape of stepped retainer 134 is such that it may be fitted closely, such as via press fitting for example, to the stator housing 30.

The Fig. 9 design and structure illustrate a sealing arrangement 138, similar to embodiment 132 of Fig. 8, except that an annular retainer 140 is closely fitted, such as via press fitting for example, to rotor housing 92 so as to constrain sealing member 28.

Turning now to Fig. 10, the design and structure of this sealing arrangement 142 does not require a loose washer 26, but instead utilizes a specialized geometry of rotor housing 92, in the form of an intermediate step 93 in rotor housing, to retain sealing member 28.

Fig. 11 illustrates a design and structure of a sealing arrangement 144 in which sealing member 28 maintains sealing contact with stator bottom wall 54 but seals against an intermediate cylindrical component 146 that is fitted closely, such as via press fitting for example, to rotor case 92. In this embodiment, it is necessary to attain a good seal between closely fitted intermediate component 146 and rotor housing 92.

Finally, the Fig. 12 design and structure illustrate a sealing arrangement 148 that is similar to embodiment 144 of Fig. 11, except that a closely fitted, such as via press fitting for example, intermediate stepped component 150 is affixed to stator housing bottom wall 54 in the stator groove 70.

The preferred cross sectional geometry of sealing member 28, such as an O-ring for example, is circular so as to permit contact on a minimum of one surface of rotor housing 92 or closely fitted intermediate cylindrical component 146 and a minimum of one surface on stator assembly 24 or closely fitted intermediate stepped cylindrical component 150. There is also a wide variety of other acceptable cross sectional shapes, e.g., square, rectangular, triangular, oval, "X", ribbed, etc., which are commonly used for sealing cylindrical surfaces. The preferred cross sectional geometry of washer 26 is rectangular, but other configurations that will retain sealing member 28 so as to facilitate its contact between rotor housing 92 and stator bottom wall 54 or intermediate components 146 or 150, can provide acceptable functions.

The preferred material for stator housing bottom wall 54 is plastic, including but not limited to: nylon, polyphenylene sulfide, polystyrene, and modified polypropylene oxide. The stator bottom wall 54 can also take the form of an adjacent closely fitted intermediate stepped cylindrical component 150, as shown in Fig. 12. The preferred material for rotor housing 92 is non-magnetic stainless steel. Although stainless steel is not mandatory, it is typically utilized in order to maintain the pressure tight vessel that is necessary to contain the pressurized fluid that flows through valve assembly portion 74. Alternate corrosion resistant materials, or materials with corrosion resistant coatings, can be used as long as they satisfy the various functional requirements of electrically driven valve assembly 20. e.g., burst strength, compatibility, magnetic properties, etc. The rotor sealing surface, instead of residing on rotor housing outer peripheral surface 98, can also be located on adjacent, closely fitted intermediate cylindrical component 146 as illustrated in Fig. 11. The material for sealing member 28 should be an elastomer resistant to water, with a silicone based elastomer being the preferred material. Alternate soft or semi-rigid elastomeric materials can also be used to provide an adequate seal. Hybrids of rigid or semi-rigid materials can also be used, e.g., coated washers, Stat-o-Seals®, etc. The preferred material for washer 26 is stainless steel due to its rigidity and corrosion resistance. Other rigid or semi-rigid materials that have sufficient corrosion resistance can also be used. The purpose of washer 26 is to provide support to resist extrusion of seal member 28 while retaining same in its position within stator groove 70 so that seal member 28 can seal against stator bottom wall 54 as well as rotor housing surface 98. Washer 26 can also be used with configurations utilizing closely fitted components 146 and 150 as an alternate sealing surface as shown in Figs. 11 and 12, respectively. Locating plate 104, which can alternatively be used to solely retain sealing member 28, is preferably stainless steel or of an alternate material, for reasons similar those already explained for washer 26.

It is deemed that one of ordinary skill in the art will readily recognize the several embodiments of the present invention fill remaining needs in this art and will be able to affect various changes, substitutions of equivalents and various other aspects of the invention as described herein. Thus, it is intended that the protection granted hereon be limited only by the scope of the appended claims.

## Claims

1. An electric motor driven valve assembly (20) comprising:
a stator assembly (22) having a stator housing (30) in which a stator (34) of the electric motor is located, the stator housing (30) defining an internal cavity (52), a portion of the stator housing (30) defining an open end of the internal cavity (52), the stator housing (30) completely closing a remainder of the internal cavity (52);
a rotor-valve assembly (24) including a rotor housing (92) within which a rotor (118) is located and a valve housing (74) within which a valve member (80) is located, the rotor honsing (92) being attached to the valve housing (74), the rotor housing (92) configured to be inserted through the open end of the internal cavity (52) and received in the internal cavity (52) of the stator housiing 30 and
a sealing arrangement (26, 28) interposed between the portion of the stator housing (30) defining the open end of the internal cavity (52) and the rotor housing (92) for preventing an intrusion of moisture into the stator housing (30), wherein the sealing arrangement (26, 28) includes an elastomeric sealing member (28) that engages both the stator housing (30) and the rotor housing (92) and wherein the stator housing (30) and the rotor housing (92) further include associated locking members (104, 56) for securing the rotor housing (92) relative to the stator housing (30) and, when the rotor housing (92) is secured to the stator housing (30), the valve housing (74) is spaced away from the stator housing (30).

2. The electric motor driven valve assembly (20) of claim 1 wherein the electric motor (22, 24) is a stepping motor (22, 24).

3. The electric motor driven valve assembly (20) of claim 1 wherein the associated locking members (104, 56) include a locating plate ring portion (104) carried by the rotor housing (92).

4. The electric motor driven valve assembly (20) of claim 3 wherein the sealing arrangement (26, 28) includes a sealing member (28) retained in a stator groove (70) of the portion of the stator housing (30) and engaging the rotor housing outer peripheral surface (98) for sealing between the stator and rotor-valve assemblies (22, 24).

5. The electric motor driven valve assembly (20) of claim 3 further including a circular washer (26) carried by the locating plate ring portion, (104) freely surrounding the rotor housing (42) and being interposed between the locating plate ring portion (104) and the sealing member (28) for retaining the sealing member (28).

6. The electric motor driven valve assembly (20) of claim, 3 wherein the sealing arrangement (26, 28) further includes an annular retainer, affixed to a lower portion of the stator housing (30) and being interposed between the locating plate ring portion (104) and the sealing member (28) for retaining the sealing member (28).

7. The electric motor driven valve assembly (20) of claim 3 wherein the sealing arrangement (26, 28) further includes an annular retainer member, closely fitted to the outer peripheral surface (98) of the rotor housing (92) and being interposed between the locating plate ring portion (104) and the sealing member (28) for retaining the sealing member (28).

8. The electric motor driven valve assembly (20) of claim 1 wherein the sealing mangement (26, 28) further includes an intermediate cylindrical component, closely fitted to the outer peripheral surface (98) of the rotor housing (92) and being located intermediate the rotor housing (92) and the sealing member (28) for sealing the stator and rotor-valve assemblies (22, 24) relative to each other.

9. The electric motor driven valve assembly (20) of claim 1 wherein the sealing arrangement (26, 28) further includes an intermediate stepped cylindrical component, affixed to the portion of the stator housing (92) and being located intermediate the stator groove (70) and the sealing member (28) for sealing the stator and rotor-valve assemblies (22, 24) relative to each other.

10. The electric motor driven valve assembly (20) of claim 2 wherein the sealing arrangement (26, 28) includes a sealing member (28) retained in a stator groove (70) of the portion of the stator housing (30).

11. An electrically rotatable stepmotor valve assembly (20) comprising in combination:
an annular stator electrical winding assembly (22) including a closed, continuous dome portion (50) on one end thereof;
a separate rotor-valve assembly (24), the stator assembly (22) being removably mounted on the rotor-valve assembly (24);
the stator assembly (22) including a housing (30) and, starting at an open end thereof an internal generally cylindrical cavity (52) extending into the dome portion (50), the cavity (52) having an internal peripheral surface of a first predetermined diameter;
the rotor-valve assembly (24) including a generally cylindrical rotor housing (92) within which the rotor (118) is located, the rotor housing (92) having an external peripheral surface (98) of a second predetermined diameter slightly smaller than the first predetermined diameter so as to permit slip fit assembly of the stator assembly (22) over a cylindrical portion of the rotor-valve assembly (24) so that the stator assembly (22) surrounds a rotor portion of the rotor-valve assembly (24);
associated locking members (104, 56) on the stator and rotor-valve assemblies (22, 24) for permitting rotary interlocking thereof; and
a sealing arrangement (26, 28) in the vicinity of the open end of the stator assembly (22) for peripherally sealing the stator assembly (22) relative to a radially adjoining peripheral portion of the rotor housing (92) wherein the sealing arrangement (26, 28) includes an elastomeric sealing member (28) that engages both the housing of the stator assembly (22) and the rotor housing (24).

12. The stepmotor valve assembly (20) of claim 11 wherein the associated locking member (104) on the rotor-valve assembly (24) includes a locating plate ring portion (104) carried by the rotor housing (92).

13. The stepmotor valve assembly (20) of claim 11 wherein the sealing arrangement (26, 28) includes a sealing member (28) retained in a stator groove (70) of a bottom wall of the stator housing (30) and engaging the rotor housing outer peripheral surface (98) for sealing between the stator and rotor-valve assemblies (22, 24).

14. The stepmotor valve assembly (20) of claim 12 further including a circular washer (26) carried by the locating plate ring portion (104), freely surrounding the rotor housing (92) and being interposed between the locating plate ring portion (104) and the sealing member (28) for retaining the sealing member (28).

15. The stepmotor valve assembly (20) of claim 12 wherein the sealing arrangement (26, 28) further includes an annular retainer, affixed to a lower portion of the stator housing (30) and being interposed between the locating plate ring portion (104) and the sealing member (28) for retaining the sealing member (28).

16. The stepmotor valve assembly 20 claim 12 wherein the sealing arrangement (26, 28) further includes an annular retainer member, closely fitted to the outer peripheral surface (98) of the rotor housing (92) and being interposed between the locating plate ring portion (104) and the sealing member (28) for retaining the sealing member (28).

17. The stepmotor valve assembly (20) of claim 12 wherein the sealing arrangement (26, 28) further includes an intermediate cylindrical component, closely fitted to the outer peripheral surface (98) of the rotor housing (92) and being located intermediate the rotor housing (92) and the sealing member (28) for sealing the stator and rotor-valve assemblies (22, 24) relative to each other.

18. The stepmotor valve assembly (20) of claim 12 wherein the sealing arrangement (26, 28) further includes an intermediate stepped cylindrical component, affixed to a lower portion of the stator housing (30) and being located intermediate the stator groove (70) and the sealing member (28) for sealing the stator and rotor-valve assemblies (22, 24) relative to each other.

19. The stepmotor valve assembly (20) of claim 11 wherein the sealing arrangement (26, 28) includes a sealing member (28) retained in a stator groove (70) of a bottom wall of the stator housing (30).

## Patentansprüche

1. Mit einem Elektromotor betriebener Ventilaufbau (20) mit:
einem Statoraufbau (22) mit einem Statorgehäuse (30), in welchem ein Stator (34) des Elektromotors angeordnet ist, wobei das Statorgehäuse (30) eine innere Kavität (52) umgrenzt, ein Abschnitt des Statorgehäuses (30) ein offenes Ende der inneren Kavität (52) begrenzt und das Statorgehäuse (30) den Rest der inneren Kavität (52) vollständig umschließt,
einem Rotorventilaufbau (24) mit einem Rotorgehäuse (92), in welchem ein Rotor (118) angeordnet ist, und einem Ventilgehäuse (74), in welchem ein Ventilelement (80) angeordnet ist, wobei das Rotorgehäuse (92) an dem Ventilgehäuse (74) angebracht bzw. befestigt ist, das Rotorgehäuse (92) so ausgelegt ist, daß es durch das offene Ende der inneren Kavität (52) eingesetzt und in der inneren Kavität (52) des Statorgehäuses (30) aufgenommen ist, und
einer Dichtungsanordnung (26, 28) zwischen dem Abschnitt des Statorgehäuses (30), welcher das offene Ende der inneren Kavität (52) begrenzt, und dem Rotorgehäuse (92), um ein Eindringen von Feuchtigkeit in das Statorgehäuse (30) zu verhindern, wobei die Dichtungsanordnung (26, 28) ein elastomeres Dichtungselement (28) aufweist, welches sowohl mit dem Statorgehäuse (30) als auch mit dem Rotorgehäuse (92) in Eingriff tritt, und wobei das Statorgehäuse (30) und das Rotorgehäuse (92) ferner zugehörige Verriegelungs- bzw. Arretierelemente (104, 56) aufweisen, um das Rotorgehäuse (92) relativ zu dem Statorgehäuse (30) zu befestigen bzw. zu sichern, und das Ventilgehäuse (74) von dem Statorgehäuse beabstandet ist, wenn das Rotorgehäuse (92) an dem Statorgehäuse (30) befestigt ist.

2. Mit einem Elektromotor betriebener Ventilaufbau (20) nach Anspruch 1, wobei der Elektromotor (22, 24) ein Schrittmotor (22, 24) ist.

3. Mit einem Elektromotor betriebener Ventilaufbau (20) nach Anspruch 1, wobei die zugehörigen Arretierelemente (104, 56) einen von dem Rotorgehäuse (92) getragenen Aufnahmeplatten-Ringabschnitt (104) aufweisen.

4. Mit einem Elektromotor betriebener Ventilaufbau (20) nach Anspruch 3, wobei die Dichtungsanordnung (26, 28) ein Dichtungselement (28) aufweist, welches in einer Statornut (70) des Abschnitts des Statorgehäuses (30) gehalten ist und mit der äußeren peripheren Oberfläche (98) des Rotorgehäuses in Eingriff tritt, um zwischen dem Stator- und dem Rotorventilaufbau (22, 24) abzudichten.

5. Mit einem Elektromotor betriebener Ventilaufbau (20) nach Anspruch 3, welcher ferner eine kreisförmige Dichtscheibe (26) aufweist, die von dem Aufnahmeplatten-Ringabschnitt (104) getragen ist, das Rotorgehäuse (92) frei umgibt und zwischen dem Aufnahmeplatten-Ringabschnitt (104) und dem Dichtungselement (28) angeordnet ist, um das Dichtungselement (28) zu halten.

6. Mit einem Elektromotor betriebener Ventilaufbau (20) nach Anspruch 3, wobei die Dichtungsanordnung (26, 28) ferner eine ringförmige Halterung aufweist, die an einem unteren Abschnitt des Statorgehäuses (30) befestigt und zwischen dem Aufnahmeplatten-Ringabschnitt (104) und dem Dichtungselement (28) angeordnet ist, um das Dichtungselement (28) zu halten.

7. Mit einem Elektromotor betriebener Ventilaufbau (20) nach Anspruch 3, wobei die Dichtungsanordnung (26, 28) ferner ein ringförmiges Halterungselement aufweist, welches eng an die äußere periphere Oberfläche (98) des Rotorgehäuses (92) angepaßt und zwischen dem Aufnahmeplatten-Ringabschnitt (104) und dem Dichtungselement (28) angeordnet ist, um das Dichtungselement (28) zu halten.

8. Mit einem Elektromotor betriebener Ventilaufbau (20) nach Anspruch 1, wobei die Dichtungsanordnung (26, 28) ferner eine zylindrische Zwischenkomponente aufweist, welche eng an die äußere periphere Oberfläche (98) des Rotorgehäuses (92) angepaßt und zwischen dem Rotorgehäuse (92) und dem Dichtungselement (28) angeordnet ist, um den Stator- und den Rotorventilaufbau (22, 24) relativ zueinander abzudichten.

9. Mit einem Elektromotor betriebener Ventilaufbau (20) nach Anspruch 1, wobei die Dichtungsanordnung (26, 28) ferner eine abgestufte zylindrische Zwischenkomponente aufweist, die an dem Abschnitt des Statorgehäuses (92) befestigt und zwischen der Statornut (70) und dem Dichtungselement (28) angeordnet ist, um den Stator- und den Rotorventilaufbau (22, 24) relativ zueinander abzudichten.

10. Mit einem Elektromotor betriebener Ventilaufbau (20) nach Anspruch 2, wobei die Dichtungsanordnung (26, 28) ein Dichtungselement (28) aufweist, welches in einer Statornut (70) des Abschnittes des Statorgehäuses (30) gehalten ist.

11. Elektrisch drehbarer Schrittmotorventilaufbau (20), welcher in Kombination aufweist:
einen elektrischen Wickelaufbau (22) für einen ringförmigen Stator mit einem abgeschlossenen, durchgehenden Kuppelabschnitt (50) an einem Ende desselben,
einen separaten Rotorventilaufbau (24), wobei der Statoraufbau (22) entfernbar an dem Rotorventilaufbau (24) befestigt ist,
wobei der Statoraufbau (22) ein Gehäuse (30) und, ausgehend von einem offenen Ende desselben, eine innere, im allgemeinen zylindrische Kavität (52) aufweist, die sich in den Kuppelabschnitt (50) hinein erstreckt und eine innere periphere Oberfläche mit einem ersten vorbestimmten Durchmesser hat,
der Rotorventilaufbau (24) ein im allgemeinen zylindrisches Rotorgehäuse (92) aufweist, in welchem der Rotor (118) angeordnet ist, wobei das Rotorgehäuse (92) eine äußere periphere Oberfläche (98) hat mit einem zweiten vorbestimmten Durchmesser, der etwas kleiner ist als der erste vorbestimmte Durchmesser, um eine Gleitpassungsanordnung des Statoraufbaus (22) über einem zylindrischen Abschnitt des Rotorventilaufbaus (24) zu ermöglichen, so daß der Statoraufbau (22) einen Rotorabschnitt des Rotorventilaufbaus (24) umgibt,
zugehörige Arretierelemente (104, 56) an dem Stator- und dem Rotorventilaufbau (22, 24), um ein drehendes Ineinandergreifen derselben zu gestatten, und
eine Dichtungsanordnung (26, 28) in der Nähe des offenen Endes des Statoraufbaus (22) für das periphere Abdichten des Statoraufbaus (22) relativ zu einem in radialer Richtung angrenzenden peripheren Abschnitt des Rotorgehäuses (92), wobei die Dichtungsanordnung (26, 28) ein elastomeres Dichtungselement (28) aufweist, welches sowohl mit dem Gehäuse des Statoraufbaus (22) als auch mit dem Rotorgehäuse (24) in Eingriff tritt.

12. Schrittmotorventilaufbau (20) nach Anspruch 11, wobei das zugehörige Arretierelement (104) an dem Rotorventilaufbau (24) einen Aufnahmeplatten-Ringabschnitt (104) aufweist, der von dem Rotorgehäuse (92) getragen ist.

13. Schrittmotorventilaufbau (20) nach Anspruch 11, wobei die Dichtungsanordnung (26, 28) ein Dichtungselement (28) aufweist, welches in einer Statornut (70) einer unteren Wand des Statorgehäuses (30) gehalten ist und mit der äußeren peripheren Oberfläche (98) des Rotorgehäuses in Eingriff tritt, um zwischen dem Stator- und dem Rotorventilaufbau (22, 24) abzudichten.

14. Schrittmotorventilaufbau (20) nach Anspruch 12, welcher ferner eine kreisförmige Dichtscheibe (26) aufweist, die von dem Aufnahmeplatten-Ringabschnitt (104) getragen ist, das Rotorgehäuse (92) frei umgibt und zwischen dem Aufnahmeplatten-Ringabschnitt (104) und dem Dichtungselement (28) angeordnet ist, um das Dichtungselement (28) zu halten.

15. Schrittmotorventilaufbau (20) nach Anspruch 12, wobei die Dichtungsanordnung (26, 28) ferner eine ringförmige Halterung aufweist, die an einem unteren Abschnitt des Statorgehäuses (30) befestigt ist und zwischen dem Aufnahmeplatten-Ringabschnitt (104) und dem Dichtungselement (28) angeordnet ist, um das Dichtungselement (28) zu halten.

16. Schrittmotorventilaufbau (20) nach Anspruch 12, wobei die Dichtungsanordnung (26, 28) ferner ein ringförmiges Halterungselement aufweist, welches eng an die äußere periphere Oberfläche (98) des Rotorgehäuses (92) angepaßt und zwischen dem Aufnahmeplatten-Ringabschnitt (104) und dem Dichtungselement (28) angeordnet ist, um das Dichtungselement (28) zu halten.

17. Schrittmotorventilaufbau (20) nach Anspruch 12, wobei die Dichtungsanordnung (26, 28) ferner eine zylindrische Zwischenkomponente aufweist, welche eng an die äußere periphere Oberfläche (98) des Rotorgehäuses (92) angepaßt und zwischen dem Rotorgehäuse (92) und dem Dichtungselement (28) angeordnet ist, um den Stator- und den Rotorventilaufbau (22, 24) relativ zueinander abzudichten.

18. Schrittmotorventilaufbau (20) nach Anspruch 12, wobei die Dichtungsanordnung (26, 28) ferner eine abgestufte zylindrische Zwischenkomponente aufweist, welche an einem unteren Abschnitt des Statorgehäuses (30) befestigt und zwischen der Statornut (70) und dem Dichtungselement (28) angeordnet ist, um den Stator- und den Rotorventilaufbau (22, 24) relativ zueinander abzudichten.

19. Schrittmotorventilaufbau (20) nach Anspruch 11, wobei die Dichtungsanordnung (26, 28) ein Dichtungselement (28) aufweist, welches in einer Statornut (70) einer unteren Wand des Statorgehäuses (30) gehalten ist.

## Revendications

1. Ensemble de vanne commandé par un moteur électrique (20) comprenant :
un ensemble de stator (22) comportant un logement de stator (30) dans lequel un stator (34) du moteur électrique est situé, le logement de stator (30) définissant une cavité intérieure (52), une partie du logement du stator (30) définissant une extrémité ouverte de la cavité intérieure (52), le logement du stator (30) fermant totalement le reste de la cavité intérieure (52),
un ensemble de vanne à rotor (24) comprenant un logement de rotor (92) à l'intérieur duquel un rotor (118) est situé et un logement de vanne (74) à l'intérieur duquel un élément de vanne (80) est situé, le logement du rotor (92) étant fixé au logement de vanne (74), le logement du rotor (92) étant configuré pour être inséré à travers l'extrémité ouverte de la cavité intérieure (52) et reçu dans la cavité intérieure (52) du logement du stator (30) ; et
un agencement d'étanchéité (26, 28) intercalé entre la partie du logement du stator (30) définissant l'extrémité ouverte de la cavité intérieure (52) et le logement du rotor (92) pour empêcher une entrée d'humidité dans le logement du stator (30), dans lequel l'agencement d'étanchéité (26, 28) comprend un élément d'étanchéité élastomère (28) s'accouplant à la fois avec le logement du stator (30) et avec le logement du rotor (92), et dans lequel le logement du stator (30) et le logement du rotor (92) comprennent également des éléments de verrouillage associés (104, 56) pour fixer le logement du rotor (92) par rapport au logement du stator (30) et, quand le logement du rotor (92) est fixé au logement du stator (30), le logement de la vanne (74) est espacé du logement du stator (30).

2. Ensemble de vanne commandé par un moteur électrique (20) selon la revendication 1, dans lequel le moteur électrique (22, 24) est un moteur pas-à-pas (22, 24).

3. Ensemble de vanne commandé par un moteur électrique (20) selon la revendication 1, dans lequel les éléments de verrouillage associés (104, 56) comprennent une partie annulaire de plaque de retenue (104) supportée par le logement de rotor (92).

4. Ensemble de vanne commandé par un moteur électrique (20) selon la revendication 3, dans lequel l'agencement d'étanchéité (26, 28) comprend un élément d'étanchéité (28) retenu dans une rainure de stator (70) de la partie du logement de stator (30) et s'accouplant avec la surface périphérique extérieure (98) du logement de rotor pour l'étanchéité entre les ensembles de stator et de vanne de rotor (22, 24).

5. Ensemble de vanne commandé par un moteur électrique (20) selon la revendication 3, comprenant également une rondelle circulaire (26) supportée par la partie annulaire de plaque de retenue (104) entourant librement le logement de rotor (92) et intercalée entre la partie annulaire de plaque de retenue (104) et l'élément d'étanchéité (28) pour retenir l'élément d'étanchéité (28).

6. Ensemble de vanne commandé par un moteur électrique (20) selon la revendication 3, dans lequel l'agencement d'étanchéité (26, 28) comprend également un élément de retenue annulaire, fixé à une partie inférieure du logement de stator (30) et intercalé entre la partie annulaire de plaque de retenue (104) et l'élément d'étanchéité (28) pour retenir l'élément d'étanchéité (28).

7. Ensemble de vanne commandé par un moteur électrique (20) selon la revendication 3, dans lequel l'agencement d'étanchéité (26, 28) comprend également un élément de retenue annulaire, étroitement disposé sur la surface périphérique extérieure (98) du logement de rotor (92) et intercalé entre la partie annulaire de plaque de retenue (104) et l'élément d'étanchéité (28) pour retenir l'élément d'étanchéité (28).

8. Ensemble de vanne commandé par un moteur électrique (20) selon la revendication 1, dans lequel l'agencement d'étanchéité (26, 28) comprend également un composant cylindrique intermédiaire, étroitement disposé sur la surface périphérique extérieure (98) du logement de rotor (92) et situé entre le logement de rotor (92) et l'élément d'étanchéité (28) pour étanchéifier les ensembles de stator et de vanne de rotor (22, 24) l'un par rapport à l'autre.

9. Ensemble de vanne commandé par un moteur électrique (20) selon la revendication 1, dans lequel l'agencement d'étanchéité (26, 28) comprend également un composant cylindrique étagé intermédiaire, fixé à la partie du logement de stator (92) et étant situé entre la rainure de stator (70) et l'élément d'étanchéité (28) pour étanchéifier les ensembles de stator et de vanne de rotor (22, 24) l'un par rapport à l'autre.

10. Ensemble de vanne commandé par un moteur électrique (20) selon la revendication 2, dans lequel l'agencement d'étanchéité (26, 28) comprend un élément d'étanchéité (28) retenu dans une rainure de stator (70) de la partir du logement de stator (30).

11. Ensemble de vanne de moteur pas-à-pas rotatif électriquement (20) comprenant en combinaison :
un ensemble d'enroulement électrique de stator annulaire (22) comprenant une partie en dôme continue fermée (50) à une extrémité de celui-ci ;
un ensemble de vanne de rotor (24) séparé, l'ensemble de stator (22) étant monté de façon amovible sur l'ensemble de vanne de rotor (24) ;
l'ensemble de stator (22) comprenant un logement (30) et, commençant à une extrémité ouverte de celui-ci, une cavité intérieure globalement cylindrique (52) s'étendant dans la partie de dôme (50), la cavité (52) comportant une surface périphérique intérieure d'un premier diamètre prédéterminé ;
l'ensemble de vanne de rotor (24) comprenant un logement de rotor (92) globalement cylindrique dans lequel le rotor (118) est situé, le logement du rotor (92) comportant une surface périphérique extérieure (98) d'un second diamètre prédéterminé légèrement inférieur au premier diamètre prédéterminé de façon à permettre un emboîtement par glissement de l'ensemble de stator (22) sur une partie cylindrique de l'ensemble de vanne de rotor (24) de telle sorte que l'ensemble de rotor (22) entoure une partie de rotor de l'ensemble de vanne de rotor (24) ;
des éléments de verrouillage associés (104, 56) sur les ensembles de stator et de vanne de rotor (22, 24) pour permettre le verrouillage rotatif de ceux-ci ; et un agencement d'étanchéité (26, 28) à proximité de l'extrémité ouverte de l'ensemble de stator (22) pour étanchéifier de façon périphérique l'ensemble de stator (22) par rapport à une partie périphérique adjointe radialement du logement de rotor (92), dans lequel l'agencement d'étanchéité (26, 28) comprend un élément d'étanchéité élastomère (28) s'accouplant à la fois avec le logement de l'ensemble de stator (22) et avec le logement de rotor (24).

12. Ensemble de vanne de moteur pas-à-pas (20) selon la revendication 11, dans lequel l'élément de verrouillage (104) associé sur l'ensemble de vanne de rotor (24) comprend une partie annulaire de plaque de retenue (104) supportée par le logement de rotor (92).

13. Ensemble de vanne de moteur pas-à-pas (20) selon la revendication 11, dans lequel l'agencement d'étanchéité (26, 28) comprend un élément d'étanchéité (28) retenu dans une rainure de stator (70) d'une paroi inférieure du logement de stator (30) et s'accouplant à une surface périphérique extérieure du logement de rotor (98) pour l'étanchéité entre les ensembles de stator et de vanne de rotor (22, 24).

14. Ensemble de vanne de moteur pas-à-pas (20) selon la revendication 12, comprenant également une rondelle circulaire (26) supportée par la partie annulaire de plaque de retenue (104) entourant librement le logement de rotor (92) et intercalé entre la partie annulaire de plaque de retenue (104) et l'élément d'étanchéité (28) pour retenir l'élément d'étanchéité (28).

15. Ensemble de vanne de moteur pas-à-pas (20) selon la revendication 12, dans lequel l'agencement d'étanchéité (26, 28) comprend également un élément de retenue annulaire, fixé à une partie inférieure du logement de stator (30) et intercalé entre la partie annulaire de plaque de retenue (104) et l'élément d'étanchéité (28) pour retenir l'élément d'étanchéité (28).

16. Ensemble de vanne de moteur pas-à-pas (20) selon la revendication 12, dans lequel l'agencement d'étanchéité (26, 28) comprend également un élément de retenue annulaire, fixé étroitement à la surface périphérique extérieure (98) du logement de rotor (92) et intercalé entre la partie annulaire de plaque de retenue (104) et l'élément d'étanchéité (28) pour retenir l'élément d'étanchéité (28).

17. Ensemble de vanne de moteur pas-à-pas (20) selon la revendication 12, dans lequel l'agencement d'étanchéité (26, 28) comprend également un composant cylindrique intermédiaire, fixé étroitement à la surface périphérique extérieure (98) du logement de rotor (92) et situé entre le logement de rotor (92) et l'élément d'étanchéité (28) pour étanchéifier les ensembles de stator et de vanne de rotor (22, 24) l'un par rapport à l'autre.

18. Ensemble de vanne de moteur pas-à-pas (20) selon la revendication 12, dans lequel l'agencement d'étanchéité (26, 28) comprend également un composant intermédiaire cylindrique étagé, fixé à une partie inférieure du logement de stator (30) et situé entre la rainure de stator (70) et l'élément d'étanchéité (28) pour étanchéifier les ensembles de stator et de vanne de rotor (22, 24) l'un par rapport à l'autre.

19. Ensemble de vanne de moteur pas-à-pas (20) selon la revendication 11, dans lequel l'agencement d'étanchéité (26, 28) comprend un élément d'étanchéité (28) retenu dans une rainure de stator (70) d'une paroi inférieure du logement de stator (30).
